# EUROPEAN PATENT APPLICATION

(11) **EP 4 588 581 A1**
(43) Date of publication of application: **23.07.2025**
(21) Application number: 24169642.6
(22) Date of filing: 11.04.2024
(51) Int. Cl.: B08B 1/12, B08B 1/20, B29C 65/02, B41F 35/00

(54) **AN APPARATUS AND METHOD FOR REMOVING DEBRIS FROM A ROLLER**

(30) Priority: 19.01.2024 PK 412024
(71) Applicant: Nicoventures Trading Limited, London WC2R 3LA (GB)
(72) Inventor: HUSSAIN, Muhammad Bilal, 44000 Islamabad (PK)
(74) Representative: Ridley, Daniel

(57) **Abstract**

An apparatus **(1)** for removing debris from a roller **(3, 45)**. The apparatus **(1)** comprises a roller **(3, 45)** configured to rotate about a roller axis **(5, 47)**, the roller **(3, 45)** comprising a circumferential surface **(7, 49)** and a brush **(9, 51)** coupled to an actuator **(13, 53)**. The actuator **(51, 53)** is configured to move the brush **(9, 51)** into engagement with the circumferential surface **( 7, 49)** of the roller so as to cause debris to be removed from the circumferential surface **( 7, 49)** upon rotation of the roller **(3, 45)** about the roller axis **(5, 47)**.

## Description

### Technical Field

The present invention relates to an apparatus and a method for removing debris from a roller, such as a heat-sealing roller. In particular, but not exclusively, the present invention may relate to an apparatus and a method for removing debris from a pair of opposed rollers, such as a pair of heat-sealing rollers.

### Background

Rollers, such as those used in manufacturing lines, for example heat-sealing rollers, embossing rollers and such like, can accumulate debris on their circumferential surface over time. For example, heat-sealing rollers, such as those used to form pouches of fleece material (for example used to make nicotine pouches), may accumulate debris, such as strands or threads of entrapped or inter-tangled fleece material, on the rollers' circumferential surfaces. This may affect the heat-sealing performance of the rollers and may cause a higher rejection rate of the pouches. Presently, in order to remove this debris, the manufacturing line has to be stopped as the debris has to be removed manually by the operators. This is time consuming, costly and presents an increased safety risk to the operators.

The present invention aims to alleviate, at least to a certain extent, the problems associated with the prior art.

### Summary

According to a first aspect of the present invention, there is provided an apparatus for removing debris from a roller, wherein the apparatus comprises:
a roller configured to rotate about a roller axis, the roller comprising a circumferential surface; and
a brush coupled to an actuator, wherein the actuator is configured to move the brush into engagement with the circumferential surface of the roller so as to cause debris to be removed from the circumferential surface upon rotation of the roller about the roller axis.

Optionally, the actuator is a linear actuator.

Optionally, the actuator is a rotary actuator (e.g. a motor).

Optionally, the actuator is an electric actuator.

Optionally, the actuator is a pneumatic actuator.

Optionally, the apparatus further comprises a pneumatic regulator configured to control, e.g. the speed of, the actuator.

Optionally, the apparatus comprises a manual control switch configured to manually actuate the actuator.

Optionally, the apparatus further comprises an adjustor for adjusting the range of movement of the brush.

Optionally, the adjustor comprises a stroke length adjustor for adjusting a stroke length of the linear actuator.

Optionally, the adjustor comprises an arc length adjustor for adjusting an arc length of the rotary actuator.

Optionally, the apparatus further comprises a brush mount and wherein the brush is mounted to the brush mount.

Optionally, the brush is slidably mounted to the brush mount and wherein a bias (e.g. a spring) is configured to resist sliding movement of the brush with respect to the brush mount, for example as the brush moves into engagement with the roller.

Optionally, the actuator is operatively coupled to an actuator mount and wherein the brush mount is slidably coupled to the actuator mount by a guide configured to slide along a rail,
Optionally, the adjustor comprises an adjustable stop.

Optionally, the stop is arranged to abuttingly engage the slide or rail so as to limit the range of motion of the actuator.

Optionally, the adjustable stop comprises a rotatably adjustable cam arranged to adjust the stroke length of the linear actuator upon rotation of the adjustable cam.

Optionally, the apparatus is an automatic apparatus and further comprises a controller configured to (e.g. automatically) actuate the actuator so as to cause the brush to move into engagement with the circumferential surface of the roller. Optionally, the controller is configured to be in communication with a detection system configured to determine when cleaning of the roller(s) is required, for example the controller may be configured to be in communication with a quality control system such that the controller actuates the actuator according to the quality control system. Optionally the controller may comprise a pneumatic control switch.

Optionally, the apparatus further comprises a debris collector configured to collect, and optionally extract, debris removed from the first roller, optionally wherein the debris collector comprises an aperture configured to receive debris removed from the first roller, optionally wherein the debris collector is operatively coupled to a vacuum source for removing debris from the debris collector.

Optionally, the roller is a first roller and comprises a first roller axis about which the first roller is configured to rotate and wherein the apparatus comprises a second roller configured to rotate about a second roller axis and wherein the second roller comprises a circumferential surface, wherein the first and second rollers are generally opposed to each other and spaced-apart substantially perpendicular to one or both of the first and second roller axes, wherein the apparatus further comprises a second brush coupled to a second actuator, wherein the second actuator is configured to move the second brush into engagement with the circumferential surface of the second roller so as to remove debris from the circumferential surface of the second roller upon rotation of the second roller.

Optionally, the first and/or second actuator is a linear actuator or a rotary actuator (e.g. a motor).

Optionally, the first and/or second actuator is an electric actuator.

Optionally, the first and/or second actuator is a pneumatic actuator.

Optionally, the first and second rollers together form part of a rotary heat sealer.

Optionally, the apparatus further comprises a debris collector configured to collect, and optionally extract, debris removed from at least one of the first and second rollers, optionally wherein the debris collector comprises an aperture configured to receive debris removed from at least one of the first and second rollers, optionally wherein the debris collector is operatively coupled to a vacuum source for removing debris from the debris collector, and optionally wherein the aperture is arranged in a path substantially tangential to at least one of, optionally both of, the first and second rollers.

Optionally, the controller is configured to (e.g simultaneously) move the first and second brushes into engagement with the first and second rollers respectively.

According to a second aspect of the present invention, there is provided a method for (e.g. automatically) removing debris from a roller, wherein the method comprises:
actuating an actuator via a controller so as to move a brush, operatively coupled to the actuator, into engagement with a circumferential surface of a roller; and
rotating the roller about a roller axis so as to cause the brush to remove debris from the circumferential surface of the roller.

Optionally the actuator is automatically actuated via the controller.

Optionally, the method further comprises collecting, via a debris collector, debris removed from the circumferential surface, wherein the debris collector comprises an aperture configured to receive the removed debris, optionally wherein the debris collector is operatively coupled to a vacuum source for removing debris from the debris collector.

Optionally, the actuator is a first actuator, wherein the brush is a first brush and wherein the roller is a first roller having a first roller axis about which the first roller is configured to rotate, and wherein the method further comprises the step of (e.g. automatically) actuating a second actuator via the controller so as to move a second brush, operatively coupled to the second actuator, into engagement with a circumferential surface of a second roller having a second roller axis about which the second roller is configured to rotate so as to remove debris from the circumferential surface of the second roller upon rotation of the second roller, and wherein the first and second rollers are arranged generally opposed to each other and are spaced-apart substantially perpendicular to one or both of the first and second roller axes.

Optionally, the controller is configured to move the first and second brushes into simultaneous engagement with the first and second rollers respectively.

### Brief Description of the Drawings

Embodiments of the invention will now be described, by way of example only, with reference to the accompanying drawings, in which:
Figure 1 is a schematic side view of an embodiment of an apparatus for removing debris from a roller according to the present invention, showing two brushes each disengaged with a respective roller; and
Figure 2 is a schematic side view of the embodiment of Figure 1, showing the two brushes in engagement with their respective roller so as to remove debris from each roller.

### Detailed description

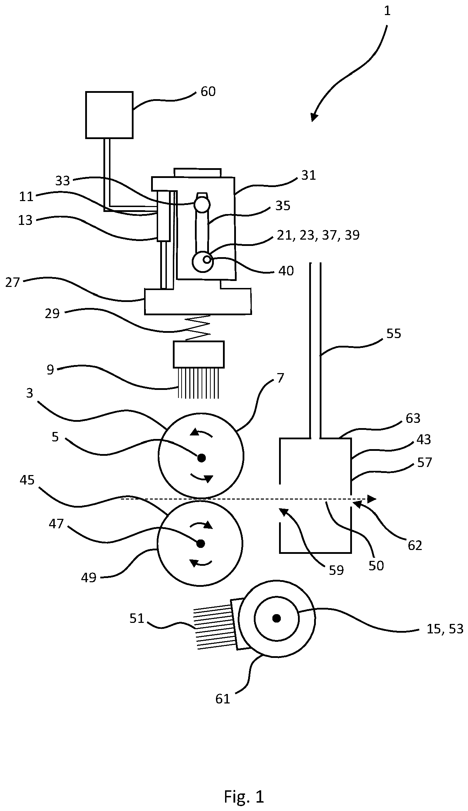

With reference to Figure 1, an embodiment of an apparatus 1 for removing debris from a roller according to the present invention is shown. The apparatus 1 comprises a first roller 3 and a second roller 45, each comprising a respective circumferential surface 7, 49 and each being configured to rotate about a respective roller axis 5, 47. The first 3 and second 45 rollers are opposed and are spaced apart from each other in a direction perpendicular to their roller axes 5, 47 so as to define a feed path 50 extending in a direction substantially tangential to the circumferential surface 7, 49 of both the first 3 and second 45 rollers. While the circumferential surface 7, 49 of each roller is referred to as such, it is not intended that the circumferential surfaces 7, 49 must define a circular cross-section but they may instead define any suitable shape in cross-section and could include features such as protrusions, dimples, heat-sealing frames and so on. Thus, the circumferential surface 7, 49 of each roller 3, 45 may instead be referred to as a peripheral surface or a roller surface.

A first brush 9, comprising brush bristles 9 which in this embodiment are made from stainless steel, is mounted to a brush mount 27 by a bias 29 such as a spring 29. In some embodiments, the first brush 9 may be slidably mounted to the first brush mount 27 and the bias 29 may resist sliding movement of the first brush 9 with respect to the first brush mount 27, and in the embodiment shown, the bias 29 biases the first brush 29 away from the first brush mount 27 and towards the first roller 3.

The brush mount 27 is slidably mounted to an actuator mount 31 via a guide 33 (which in this embodiment is a pin) of brush mount 27 which is configured to slide along a rail 35 provided as a slot 35 in the actuator mount 31. Thus, the brush mount 27 is configured to slide towards the first roller 3 so as to move the brush 9 into engagement with the circumferential surface 7 of the first roller 3.

An actuator 13 operatively couples the actuator mount 27 and the brush mount 27 so as to cause the brush mount 27 to slide with respect to the actuator mount 31 upon actuation of the actuator 13. In this embodiment, the actuator 13 is a linear actuator 13, and, specifically, it is a pneumatic linear actuator but it could instead be a hydraulic actuator or an electric actuator or any other such suitable actuator. A pneumatic regular 60 is coupled to the actuator 13 and may be configured to control the speed of the actuator 13.

The actuator 13 may be actuated by a manual switch or by a controller. In embodiments where the actuator 13 is actuated by a controller, the controller may be configured to automatically actuate the actuator 13 so as to cause the brush 9 to move into engagement with the circumferential surface 7 of the roller 3. In some embodiments, the controller may be configured to be in communication with a detection system configured to determine when cleaning of the roller 3 is required, for example the controller may be configured to be in communication with a quality control system such that the controller actuates the actuator according to, for example a determination made by, the quality control system.

An adjustor 21 allows for the range of movement of the brush mount 27, and therefore of the brush 9, with respect to the actuator mount 31 to be adjusted as required. In this embodiment, the adjustor 21 is configured to adjust the stroke length of the linear actuator 13 and thus is configured to control the extent to which the brush 9 is in engagement with the roller 7. According to Hooke's law, the further the brush mount 27 moves towards the roller 3, the greater the compression of the spring 29, the greater the force provided by the spring 29 and, thus, the greater the force of the brush against the circumferential surface 7 of the roller 3 which may facilitate the removal of debris from the roller 3.

The adjustor 21 in this embodiment comprises an adjustable stop 37 against which guide 33 is configured to engage so as to limit the range of movement of the brush mount 27 with respect to the actuator mount 31, and therefore to limit the movement of the brush 9 towards the roller 3. The adjustable stop 37 comprises a rotatably adjustable cam 39 coupled to the actuator mount 31 by an off-centred pin 40. An operator rotates the cam 39 so as to provide the desired stroke length and the cam 39 is then fixed in that position, e.g. by tightening a screw or bolt (for example, the pin 40 could in some embodiments be a threaded bolt received with a female thread provided in the actuator mount 31 which, when tightened, rotationally affixes the cam 39 to the actuator mount 31). Rotation of the cam 39 causes the guide 33 to engage the adjustable stop 37 at an earlier or later point along slot 35 and thus the range of movement of the brush mount 27, and thereby of the brush 9, may be adjusted.

A second brush 51, also comprising brush bristles 51, is mounted to a brush mount 61. The brush mount 61 is rotationally coupled to a rotary actuator 53 which, in this embodiment is an electric motor 15 (specifically a stepper motor), such that rotation of the rotary actuator 53 causes the second brush 51 to engage the circumferential surface 49 of the second roller 45 so as to remove debris therefrom. In the same way as the linear actuator 13, the rotary actuator 53 may be coupled to a manual switch configured to actuate the rotary actuator 53 or the rotary actuator 53 may instead or additionally be coupled to a controller to actuate the rotary actuator 53, and thereby cause the second brush 51 to engage the second roller 45 so as to remove debris therefrom. In some embodiments, the controller may be configured to be in communication with a detection system configured to determine when cleaning of the roller 45 is required, for example the controller may be configured to be in communication with a quality control system such that the controller actuates the actuator according to, for example a determination made by, the quality control system. In embodiments wherein the first 3 and second 45 rollers define a pair of heat-sealing rollers, the quality control system may monitor the quality of the heat seal provided by the heat-sealing rollers and the controller may actuate the actuator according to a determination made by the quality control system based on said monitoring. In other embodiments, the controller may be configured to actuator the actuator(s) based on a determination of the rejection rate made by the quality control system.

In some embodiments, the rotary actuator 53 comprises an arc length adjustor for adjusting an arc length of the rotary actuator which may, in some embodiments, be similar to the adjustor 21 in that it may comprise a guide 33 slidably received within an arcuate rail 35 and may comprise a rotatably adjustable cam 40 arranged in the same way so as to provide an adjustable stop for the movement of the guide 33 along the rail 35. In some embodiments, the rotary actuator 53 may not require such an arc length adjustor, for example in embodiments wherein the rotary actuator is a stepper motor or such like and the position of the motor can instead be controlled by a motor controller, as will be understood by a person skilled in the art.

As will be appreciated, it is not essential that both the first and second rollers each have a respective brush and indeed embodiments are envisaged wherein only one of the rollers has a respective brush for removing debris therefrom. Similarly, it is not essential that, in embodiments in which two brushes are provided, one brush must be coupled to a linear actuator and the other must be coupled to a rotary actuator, but instead embodiments wherein each brush is coupled to a respective rotary actuator or wherein each brush is coupled to a respective linear actuator, or indeed wherein each brush is coupled to a common actuator, are also envisaged.

The apparatus 1 also comprises a debris collector 43 comprising a chamber 63 configured to collect debris removed from the rollers 3, 45. The debris collector 43 comprises an aperture 59 arranged such that the feed path 50 passes therethrough.

Thus, the aperture 59 is substantially tangential to the circumferential surfaces 7, 49 of the first and second rollers 3, 45. In embodiments in which only one brush 9, 51 is provided, the aperture 59 may be arranged substantially tangential to the circumferential surface 7 of the roller 3 configured to be engaged by the single brush 9.

The chamber 63 of the debris collector 43 is fluidly coupled to a vacuum source 55 which is configured to remove, via vacuum, debris within the chamber 63 collected by the collector 43.

The debris collector 43 may in some embodiments also comprise a second aperture 62 arranged within the feed path 50 and substantially in opposition to the first aperture 59. Thus, the debris collector 43 may retain *in situ* and does not need to be repositioned into and out of the feed path 50 during cleaning of the rollers 3, 45 as feed material moving between the rollers 3, 45 and along the feed path 50 may enter the first aperture 59 of the debris collector 43 and may pass entirely through the chamber 63 of the debris collector 43 and may exit through the second aperture 62. Thus, the feed into the rollers does not need to be stopped in order for the brushes 9, 51 to clean the rollers 3,45.

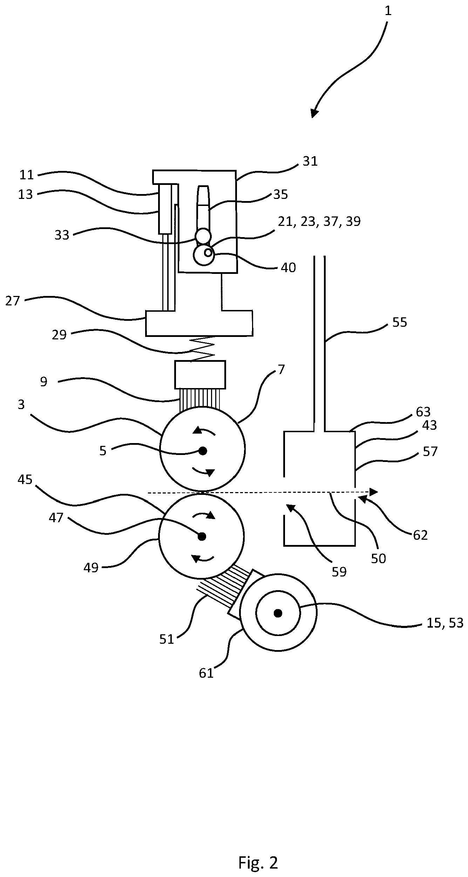

Turning now to Figure 2, the engagement of the first 9 and 51 second brushes with their respective rollers 3, 45 is shown. As can be seen, the rotary actuator 53 has rotated the second brush into engagement with the circumferential surface 49 of the second roller 45 so as to remove debris therefrom. Similarly, the linear actuator 13 has moved the first brush 9 into engagement with the circumferential surface 7 of the first roller 3 so as to remove debris therefrom. Advantageously, the brush bias 29 provides a cushioning effect, softening the engagement of the brush 9 with the first roller 3 as it compresses so as to absorb jerk, vibration and pressure on the rollers. Furthermore, the bias 29 may help prevent the brush 9 from crashing into the first roller 3 as it provides some allowance in the adjustor 21 being mis-calibrated.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

**1.** An apparatus for removing debris from a roller, wherein the apparatus comprises:
a roller configured to rotate about a roller axis, the roller comprising a circumferential surface; and
a brush coupled to an actuator, wherein the actuator is configured to move the brush into engagement with the circumferential surface of the roller so as to cause debris to be removed from the circumferential surface upon rotation of the roller about the roller axis.

**2.** The apparatus of Claim 1, wherein the actuator is a linear actuator.

**3.** The apparatus of Claim 1, wherein the actuator is a rotary actuator (e.g. a motor).

**4.** The apparatus of any one of Claims 1 to 3, wherein the actuator is an electric actuator or a pneumatic actuator.

**5.** The apparatus of any preceding claim, wherein the apparatus further comprises an adjustor for adjusting the range of movement of the brush, optionally wherein the adjustor comprises an adjustable stop.

**6.** The apparatus of Claim 5 when dependent on Claim 2, wherein the adjustor comprises a stroke length adjustor for adjusting a stroke length of the linear actuator.

**7.** The apparatus of Claim 5 when dependent on Claim 3, wherein the adjustor comprises an arc length adjustor for adjusting an arc length of the rotary actuator.

**8.** The apparatus of any preceding claim, wherein the apparatus further comprises a brush mount and wherein the brush is mounted to the brush mount, optionally wherein the actuator is operatively coupled to an actuator mount and wherein the brush mount is slidably coupled to the actuator mount by a guide configured to slide along a rail.

**9.** The apparatus of any preceding claim, further comprising a controller configured to automatically actuate the actuator so as to cause the brush to move into engagement with the circumferential surface of the roller.

**10.** The apparatus of any preceding claim, wherein the roller is a first roller and comprises a first roller axis about which the first roller is configured to rotate and wherein the apparatus comprises a second roller configured to rotate about a second roller axis and wherein the second roller comprises a circumferential surface, wherein the first and second rollers are generally opposed to each other and spaced-apart substantially perpendicular to one or both of the first and second roller axes, wherein the apparatus further comprises a second brush coupled to a second actuator, wherein the second actuator is configured to move the second brush into engagement with the circumferential surface of the second roller so as to remove debris from the circumferential surface of the second roller upon rotation of the second roller, optionally wherein the first and/or second actuator is a linear actuator or a rotary actuator (e.g. a motor), optionally wherein the first and/or second actuator is an electric actuator, optionally wherein the first and/or second actuator is a pneumatic actuator.

**11.** The apparatus of Claim 10, wherein the first and second rollers together form part of a rotary heat sealer.

**13.** The apparatus of Claim 10 or 11, wherein the apparatus further comprises a debris collector configured to collect debris removed from the first and/or second rollers.

**14.** A method for removing debris from a roller, wherein the method comprises:
actuating an actuator via a controller so as to move a brush, operatively coupled to the actuator, into engagement with a circumferential surface of a roller; and
rotating the roller about a roller axis so as to cause the brush to remove debris from the circumferential surface of the roller.

**15.** The method of Claim 14, wherein the actuator is a first actuator, wherein the brush is a first brush and wherein the roller is a first roller having a first roller axis about which the first roller is configured to rotate, and wherein the method further comprises the step of actuating a second actuator via the controller so as to move a second brush, operatively coupled to the second actuator, into engagement with a circumferential surface of a second roller having a second roller axis about which the second roller is configured to rotate so as to remove debris from the circumferential surface of the second roller upon rotation of the second roller, and wherein the first and second rollers are arranged generally opposed to each other and are spaced-apart substantially perpendicular to one or both of the first and second roller axes.
